(19) Europäisches Patentamt / European Patent Office / Office européen des brevets

(11) **EP 2 509 330 A2**

(12) **EUROPEAN PATENT APPLICATION**

(43) Date of publication:
**10.10.2012 Bulletin 2012/41**

(51) Int Cl.:
***H04N 13/04*** *(2006.01)*

(21) Application number: **12154520.6**

(22) Date of filing: **08.02.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **04.04.2011 JP 2011082467**

(71) Applicant: **Sony Corporation Tokyo 108-0075 (JP)**

(72) Inventor: **Hyodo, Katsuya Minato-ku, Tokyo 108-0075 (JP)**

(74) Representative: **Ealey, Douglas Ralph D Young & Co LLP 120 Holborn London EC1N 2DY (GB)**

(54) **Display control apparatus and method, and program**

(57) In an image display apparatus for displaying plural-viewpoint images, a position specifying unit specifies a position of a user viewing an image, an image determination unit determines an image at a viewpoint recognized by the user from the plural-viewpoint images based on the position of the user specified by the position specifying unit, and a display control unit controls the display of the image determined by the image determination unit on a display. The present disclosure, for example, is applied to a display for implementing naked-eye stereoscopic vision.

**FIG.4**

**Description**

The present disclosure relates to a display control apparatus and method, and a program.

In the related art, there have been disclosed display apparatuses capable of displaying a stereoscopic image through a parallax barrier system, a lenticular lens system and the like without special glasses.

As described above, among the display apparatuses capable of displaying the stereoscopic image without special glasses, that is, capable of implementing naked-eye stereoscopic vision, some may detect a head position of a viewer who views the stereoscopic image and perform control for changing a stereoscopic vision range (for example, refer to Japanese Patent Application Laid-Open No. 2002-300610 and Japanese Patent Application Laid-Open No. 10-333092).

However, in a display apparatus capable of implementing naked-eye stereoscopic vision, a left-eye image and a right-eye image, that is, two-viewpoint images are displayed to be viewed by the left and right eyes of a viewer, respectively. In a display apparatus capable of implementing naked-eye stereoscopic vision at multi-viewpoints equal to or higher than three viewpoints, a left-eye image and a right-eye image to be viewed change according to the viewpoint (position) of a viewer. However, power consumption for an image not being viewed is wasteful.

In light of the foregoing, it is desirable to reduce power consumption of a display for displaying multi-viewpoint images.

Various respective aspects and features of the invention are defined in the appended claims. Combinations of features from the dependent claims may be combined with features of the independent claims as appropriate and not merely as explicitly set out in the claims.

Embodiments of the present invention relate to a display control apparatus and method capable of reducing power consumption of a display for displaying multi-viewpoint images, and a program.

According to the present disclosure, there is provided a display control apparatus that controls an image display apparatus for displaying plural-viewpoint images, the display control apparatus including, a position specifying unit configured to specify a position of a user, an image determination unit configured to determine the image at a viewpoint recognized by the user from the plural-viewpoint images based on the position of the user specified by the position specifying unit, and a display control unit configured to control display of the image determined by the image determination unit.

The image display apparatus may comprise a light emitting element configured to emit light in units of pixels. The display control unit may control light emission of the light emitting element corresponding to the image determined by the image determination unit, thereby controlling display of the image.

The position specifying unit may calculate a movement distance of the user based on a change in the position of the user. The image determination unit may determine the image at two or more viewpoints, which are recognized by the user, according to the movement distance of the user calculated by the position specifying unit.

The image display apparatus may display a stereoscopic image including the plural-viewpoint images. According to the present disclosure, there is provided a display control method of a display control apparatus that controls an image display apparatus for displaying plural-viewpoint images, the display control method including specifying a position of a user, determining the image at a viewpoint recognized by the user from the plural-viewpoint images based on the position of the user specified in the specifying of the position of the user, and controlling display of the image determined in the determining of the image.

According to the present disclosure, there is provided a program for causing a computer to perform a display process of a display control apparatus that controls an image display apparatus for displaying plural-viewpoint images, wherein the program causes the computer to perform a process including specifying a position of a user, determining the image at a viewpoint recognized by the user from the position of the user among the plural-viewpoint images based on the position of the user specified in the specifying of the position of the user, and controlling display of the image determined in the determining of the image.

According to an embodiment of the present disclosure, a position of a user is specified, an image at a viewpoint recognized by the user is determined based on the specified position of the user among plural-viewpoint images displayed on the image display apparatus, and display of the determined image is controlled.

According to an embodiment of the present disclosure, it is possible to reduce power consumption of a display for displaying multi-viewpoint images.

Embodiments of the invention will now be described with reference to the accompanying drawings, throughout which like parts are referred to by like references, and in which:

FIG 1 is a diagram illustrating an external appearance configuration of a multi-viewpoint image display system employing the present disclosure according to an embodiment;
FIG 2 is a diagram for explaining a parallax barrier system;
FIG 3 is a diagram for explaining a parallax barrier system;

FIG 4 is a block diagram illustrating a functional configuration example of an image display apparatus;

FIG 5 is a flowchart for explaining a display displaying control process;

FIG 6 is a diagram for explaining a coordinate system set to a display;

FIG 7 is a diagram for explaining an input image recognized by a user; and

FIG 8 is a block diagram illustrating a configuration example of hardware of a computer.

Hereinafter, preferred embodiments of the present disclosure will be described in detail with reference to the appended drawings. Note that, in this specification and the appended drawings, structural elements that have substantially the same function and structure are denoted with the same reference numerals, and repeated explanation of these structural elements is omitted.

Hereinafter, an embodiment of the present disclosure will be described with reference to the appended drawings. In addition, the description will be given in the following order.

1. External appearance configuration of multi-viewpoint image display system
2. Description of parallax barrier system
3. Functional configuration of image display apparatus
4. Display displaying control process

<1. External appearance configuration of multi-viewpoint image display system>

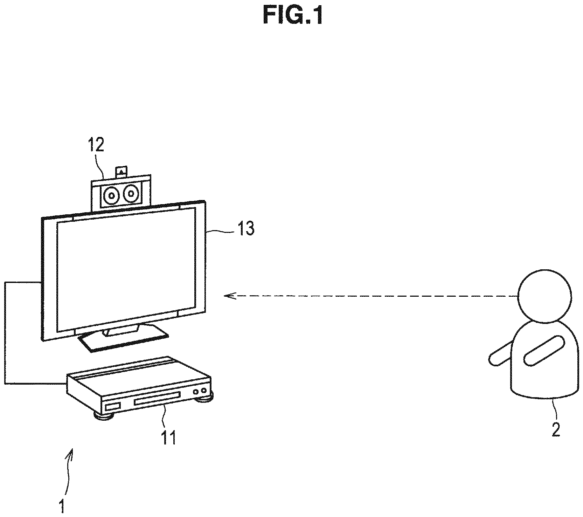

FIG 1 is a diagram illustrating an external appearance configuration of a multi-viewpoint image display system employing the present disclosure according to an embodiment.

The multi-viewpoint image display system 1 of FIG 1 displays plural viewpoint images, that is, multi-viewpoint images, thereby providing a user 2 with a stereoscopic image. It is possible for the user 2 to view the stereoscopic image corresponding to a position of the user 2 with respect to the multi-viewpoint image display system 1. Here, the multi-viewpoints are viewpoints equal to or higher than three viewpoints.

The multi-viewpoint image display system 1 includes an image reproduction apparatus 11, a stereo camera 12, and an image display apparatus 13.

The image reproduction apparatus 11 reproduces the multi-viewpoint images, thereby inputting the multi-viewpoint images to the image display apparatus 13. When the number of the multi-viewpoint images is N, that is, when N viewpoint images are reproduced, the N viewpoint images, for example, may be images imaged by N digital video cameras, or images obtained by interpolating images photographed by digital video cameras smaller than N.

The stereo camera 12 includes two cameras arranged at left and right sides, and images the user 2 as an object at a predetermined timing to supply the image reproduction apparatus 11 with two images (camera images) obtained by the imaging result.

The image display apparatus 13, for example, includes a television receiver and the like. The image display apparatus 13 is provided with a display including light emitting elements such as organic electro luminescent (EL) elements that emit light in units of pixels, and displays the multi-viewpoint images from the image reproduction apparatus 11 through a parallax barrier system.

Furthermore, the image display apparatus 13 specifies the position of the user 2 with respect to a depth direction of the image display apparatus 13 through a stereo matching method based on the two camera images from the stereo camera 12.

That is, according to the stereo matching method, the position of the camera image imaged by the left camera of the stereo camera 12, which corresponds to a part of the camera image imaged by the right camera, is calculated through an arithmetic operation of area correlation, and the principle of triangulation based on the correspondence relation between the two images is used, so that the position of the user 2 in the depth direction is calculated.

Then, the image display apparatus 13 controls the light emission of the light emitting elements (the organic EL elements) constituting the display such that only an image at a viewpoint recognized by the user 2 among the multi-viewpoint images displayed on the display is displayed according to the position of the user 2 in the depth direction.

<2. Description of parallax barrier system >

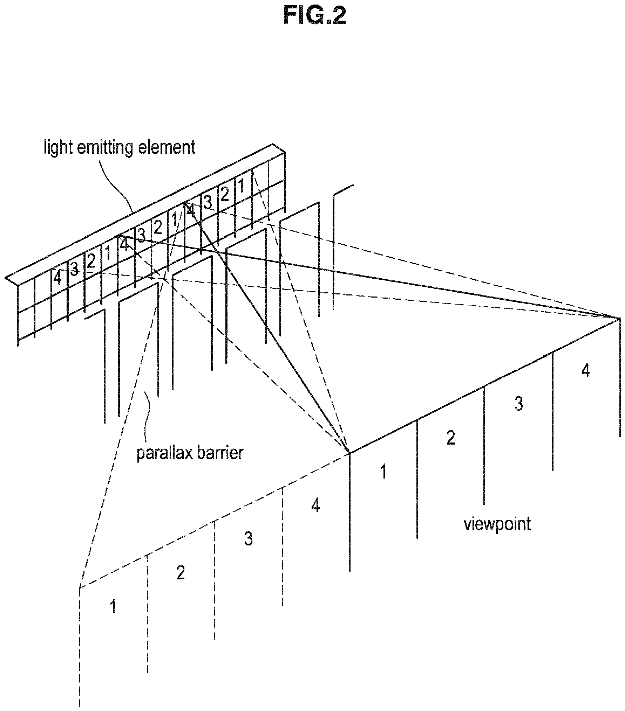

For example, when the image display apparatus 13 displays four viewpoint images, light emitting elements (hereinafter referred to as light emitting elements "1" to "4") with numerals "1" to "4" corresponding to the four viewpoint images emit light in the display of the image display apparatus 13 as illustrated in FIG 2. In the display, a parallax barrier having slits in a vertical direction is provided at a front side (the user 2-side) of the light emitting elements, and light of the light emitting elements having transmitted through the slits of the parallax barrier is captured at two viewpoints adjacent to each other among the viewpoints "1" to "4" of the user, so that it is possible to view a stereoscopic image.

At this time, the image display apparatus 13 allows light emitting elements corresponding to an image at a viewpoint not recognized by the user 2 to be blocked by the parallax barrier, and prevents light emitting elements corresponding to light not captured at the viewpoint of the user from emitting light.

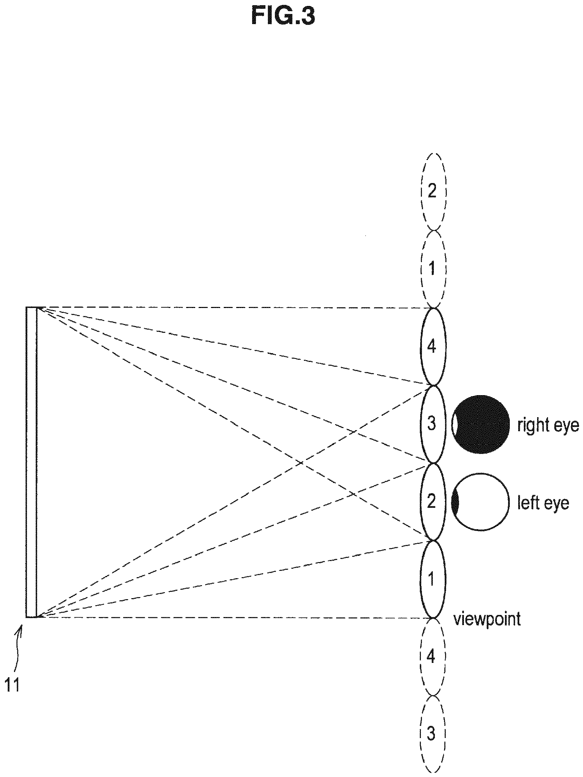

In detail, as illustrated in FIG 3, when the left eye of the user 2 corresponds to the viewpoint "2" and the right eye of the user 2 corresponds to the viewpoint "3", light of the light emitting elements "1" and "4" in FIG 2 is not captured at the viewpoint of the user. Thus, in this case, the light emitting elements "2" and "3" in FIG 2 are controlled to emit light, and the light emitting elements "1" and "4" are controlled not to emit light.

<3. Functional configuration of image display apparatus >

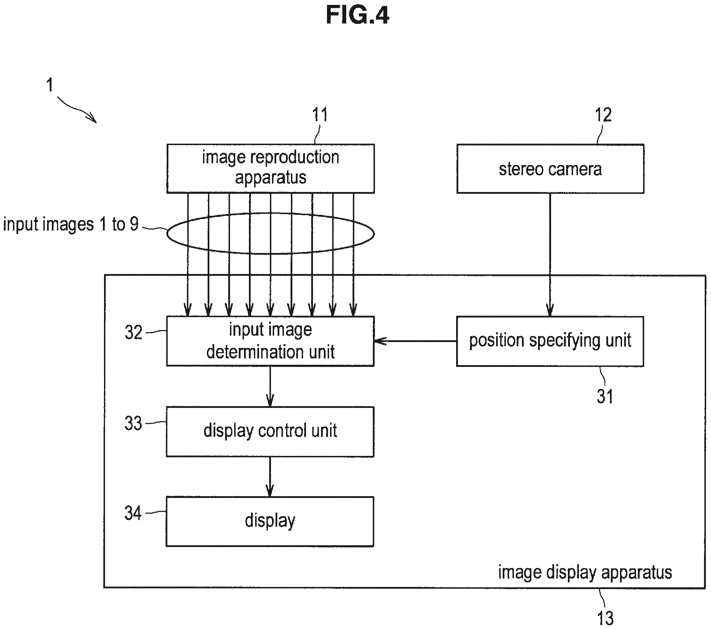

Next, the functional configuration example of the image display apparatus 13 in the multi-viewpoint image display system 1 of FIG 1 will be described with reference to FIG 4.

Hereinafter, it is assumed that the image reproduction apparatus 11 reproduces nine viewpoint images, and these reproduced images are input to the image display apparatus 13 as input images 1 to 9.

The image display apparatus 13 of FIG 4 includes a position specifying unit 31, an input image determination unit 32, a display control unit 33, and a display 34.

The position specifying unit 31 acquires the camera images from the stereo camera 12, and specifies the position of the user 2 with respect to the depth direction of the image display apparatus 13 through the above-mentioned stereo matching method based on the camera images.

The input image determination unit 32 receives the input images 1 to 9 from the image reproduction apparatus 11, and determines input images at the viewpoint recognized by the user 2, that is, input images to be output to the display 34, from the input images 1 to 9 based on the position of the user 2 specified by the position specifying unit 31.

The display control unit 33 controls the display of the display 34 such that the input images determined by the input image determination unit 32 are displayed on the display 34.

The display 34 includes self-light emitting elements such as the organic EL elements that emit light in units of pixels, and displays the input images determined by the input image determination unit 32 among the input images 1 to 9 at nine viewpoints from the image reproduction apparatus 11 through the parallax barrier system under the control of the display control unit 33. In detail, in the display 34, the light emission of the organic EL elements corresponding to the input images determined by the input image determination unit 32 is controlled by the display control unit 33.

In addition, the image display apparatus 13 may be allowed to include only the display 34, and a display control device provided with the position specifying unit 31, the input image determination unit 32, and the display control unit 33 may be provided as a display control device for controlling the display of the image display apparatus 13.

<4. Display displaying control process>

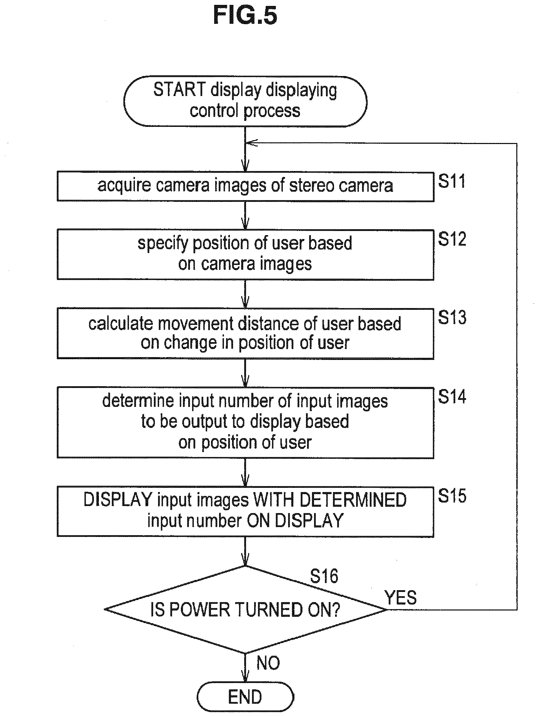

Hereinafter, the display displaying control process in the image display apparatus 13 will be described with reference to the flowchart of FIG 5. The display displaying control process of FIG 5 starts if the image reproduction apparatus 11, the stereo camera 12, and the image display apparatus 13 constituting the multi-viewpoint image display system 1 of FIG 1 are all powered on, and the image reproduction in the image reproduction apparatus 11 is instructed according to an operation of the user 2.

In step S11, the position specifying unit 31 acquires the camera image from the stereo camera 12.

In step S12, the position specifying unit 31 specifies the position of the user 2 with respect to the depth direction of the image display apparatus 13 through the above-mentioned stereo matching method based on the camera images acquired from the stereo camera 12.

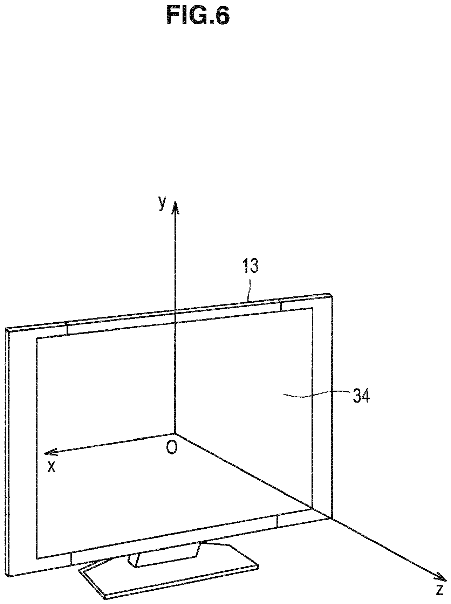

Here, for example, as illustrated in FIG 6, a coordinate system is set such that the center of the display 34 of the image display apparatus 13 is set as the origin O, a horizontal direction (the left direction of FIG 6) on a plane including the surface of the display 34 is set as an x axis direction, a vertical direction (the upper direction of FIG 6) on a plane including the surface of the display 34 is set as a y axis direction, and a direction (a direction toward the user) vertical to the surface of the display 34 is set as a z axis direction.

In such a case, the position specifying unit 31 calculates the position $(Px, Pz)$ of the user 2 on the xz plane through the stereo matching method, and stores position information indicating the position (the coordinate) therein while supplying the position information to the input image determination unit 32.

In step S 13, the position specifying unit 31 determines a change in the position of the user 2 based on immediately previous position information among the position information stored therein (hereinafter referred to as immediately previous position information), and position information specified at that time (hereinafter referred to as current position information), and calculates a movement distance of the user 2 based on the change in the position of the user 2.

For example, if the position (the current position) of the user 2 represented by the current position information is set as (Px, Pz) and the position (the immediately previous position) of the user 2 represented by the immediately previous position information is set as (Px_pre, Pz_pre), the movement distance D of the user 2 on the xz plane is represented by the following Equation 1.

$$\text{Equation 1}$$

$$D = \sqrt{(Px - Px\_pre)^2 + (Pz - Pz\_pre)^2}$$

The position specifying unit 31 supplies the input image determination unit 32 with movement distance information indicating the calculated movement distance of the user 2.

In step S14, the input image determination unit 32 determines an input number indicating the input images to be output to the display 34 among the input images 1 to 9 based on the current position (Px, Pz) of the user 2 represented by the position information (the current position information) from the position specifying unit 31. In other words, the input image determination unit 32 determines an input number of input images at the viewpoint recognized by the user 2 from the input images 1 to 9 based on the current position (Px, Pz) of the user 2.

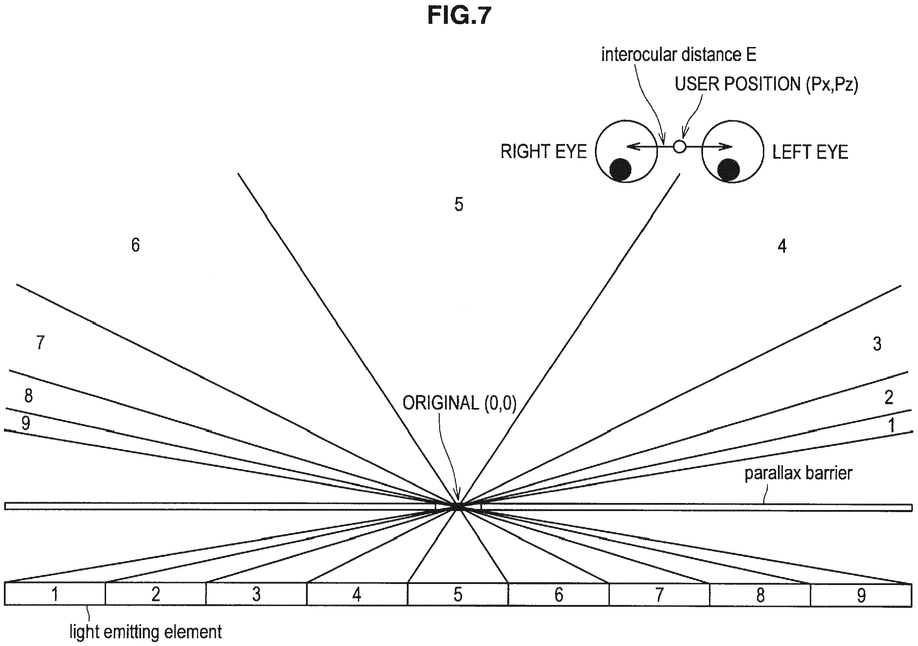

Hereinafter, the viewpoint of the user 2 and the input image recognized by the user 2 will be described with reference to FIG 7. In addition, in FIG 7, the right direction is an x axis direction and the upper direction is a z axis direction.

As illustrated at the right upper side of FIG 7, if the current position (Px, Pz) of the user 2 is set as the center of both eyes of the user 2 and an interocular distance between the left eye and the right eye is set as E, the position (Px_left, Pz_lefi) of the left eye of the user 2 is represented by (Px_left, Pz_left) = (Px+E/2, Pz) and the position (Px_right, Pz_right) of the right eye of the user 2 is represented by (Px_right, Pz_right) = (Px-E/2, Pz) on the xz plane. In addition, it is assumed that both of the eyes of the user 2 are positioned in parallel to the surface of the display 34.

Furthermore, the lower side of FIG 7 illustrates the light emitting elements "1" to "9," which emit light transmitting the slits of the parallax barrier at the origin O (0,0) and correspond to the input images 1 to 9, among the light emitting elements (the organic EL elements) constituting the display 34.

In addition, in FIG 7, the widths of the light emitting elements of the display 34 are approximately equal to one another with respect to the interocular distance E. However, actually, the widths of the light emitting elements of the display 34 are sufficiently small with respect to the interocular distance E.

Here, in FIG 7, when the widths of the slits of the parallax barrier are regarded as points and the distance between the surfaces of the light emitting elements of the display 34 and the parallax barrier is well-known, the input image determination unit 32 determines that an input image recognized by the left eye of the user 2 is the input image 4 corresponding to the light emitting element "4" on a straight extension line passing through the position (Px_left, Pz_left) of the left eye of the user 2 and the origin O. Furthermore, the input image determination unit 32 determines that an input image (a light emitting element) recognized by the right eye of the user 2 is the input image 5 corresponding to the light emitting element "5" on a straight extension line passing through the position (Px_right, Pz_right) of the right eye of the user 2 and the origin O.

That is, in the example of FIG 7, the input images recognized by the user 2 are the input images 4 and 5, and the input image determination unit 32 sets an input number (I, J) indicating the input images as (4, 5). The input number (I, J) indicates two input images corresponding to adjacent light emitting elements.

In this way, two input images to be output to the display 34 are determined according to the position of the user 23 at that time.

However, when there is motion of the user 2 and the motion is fast, both of the eyes of the user 2 are considered to recognize light of light emitting elements other than light emitting elements corresponding to the determined two input images.

In this regard, the input image determination unit 32 determines an input number of input images to be output to the display 34 among the input images 1 to 9 based on the movement distance of the user 2 indicated by the movement distance information from the position specifying unit 31, in addition to the position of the user 2 indicated by the position information from the position specifying unit 31.

IfD_low is set as a threshold value for determining that the movement distance D of the user 2 is short and D_high is set as a threshold value for determining that the movement distance of the user 2 is long, the input number indicating the input images to be output to the display 34 is determined as follows according to the movement distance D of the user 2.

(1) 0 < D < D_low
An input number of input images to be output to the display 34: (I, J)
(2) D_low ≤ D < D_high

An input number of input images to be output to the display 34: (I-1, I, J, J+1)

(3) D_high ≤ D

An input number of input images to be output to the display 34: (1, 2, 3, 4, 5, 6, 7, 8, 9)

That is, for example, in the example of FIG 7, when the movement distance D of the user 2 is smaller than the threshold value D_low, since the input number indicating the input images to be output to the display 34 is (4, 5), the two input images 4 and 5 are output to the display 34.

Furthermore, in the example of FIG 7, when the movement distance D of the user 2 is equal to or more than the threshold value D_low and smaller than the threshold value D_high, since the input number indicating the input images to be output to the display 34 is (3, 4, 5, 6), the four input images 3 to 6 are output to the display 34.

In addition, in the example of FIG 7, when the movement distance D of the user 2 is equal to or more than the threshold value D_high, since the input number indicating the input images to be output to the display 34 is (1, 2, 3, 4, 5, 6, 7, 8, 9), all the input images 1 to 9 are output to the display 34.

Returning to the description of the flowchart of FIG 5, in step S 15, the display control unit 33 controls the display of the display 34 such that the input images with the input number determined by the input image determination unit 32 are displayed on the display 34. That is, the display control unit 33 controls the light emission of light emitting elements in the display 34, which correspond to the input images with the input number determined by the input image determination unit 32.

After step S 15 is performed, the process proceeds to step S16 so that the image display apparatus 13 determines whether the image reproduction apparatus 11, the stereo camera 12, and the image display apparatus 13 constituting the multi-viewpoint image display system 1 of FIG 1 are all powered on.

In step S16, when it is determined that the image reproduction apparatus 11, the stereo camera 12, and the image display apparatus 13 are all powered on, the process returns to step S11, and the processes of steps S11 to S16, for example, are repeated each 0.5 seconds.

Meanwhile, in step S16, when it is determined that the image reproduction apparatus 11, the stereo camera 12, and the image display apparatus 13 are not all powered on, that is, when any one of the image reproduction apparatus 11, the stereo camera 12, and the image display apparatus 13 is powered off, the display displaying control process ends. In addition, in step S16, it is determined whether image reproduction in the image reproduction apparatus 11 has been stopped by an operation of the user 2. When it is determined that the reproduction has been stopped, the display displaying control process may also end.

According to the above processes, based on the position of the user 2 with respect to the display 34, only light emitting elements corresponding to input images recognized by the user 2 are allowed to emit light, while light emitting elements corresponding to input images not recognized by the user 2 are turned off. Consequently, power of light emitting elements corresponding to images not recognized by a user is not consumed, so that it is possible to reduce power consumption of a display that displays multi-viewpoint images. In detail, in a display that displays multi-viewpoint images at N viewpoints, it is possible to reduce power consumption by 2/N times of power consumption when the light emitting elements are all allowed to emit light.

Furthermore, even when there is motion of a user, for example, since light emitting elements other than those corresponding to the input images determined to be displayed on the display 34 are allowed to emit light according to a movement distance for a predetermined time such as an interval of 0.5 seconds, that is, a movement speed, it is possible to prevent a user viewing an image while moving from being inconvenienced.

So far, the case where one user views an image has been described. However, when a plurality of users view an image, it is sufficient if the position of each user is specified and light emitting elements corresponding to an image recognized by each user are allowed to emit light.

Furthermore, the position specifying unit 31 specifies the position of the user 2 based on the camera images from the stereo camera 12. However, for example, instead of the stereo camera 12, a measurement unit for measuring the position of the user 2 using a predetermined technique may be provided, and a measurement result of the measurement unit may be used as the position of the user 2.

Moreover, as illustrated in FIG 2, the slits in the vertical direction are provided in the parallax barrier of the display 34. However, for example, slits in a horizontal direction may be provided, or grid-like slits may be provided and only light emitting elements that emit light transmitting such slits may be allowed to emit light according to the position of the user.

Furthermore, the display 34 displays a stereoscopic image using a parallax barrier system. However, the display 34 may display the stereoscopic image using a lenticular lens system.

Moreover, the multi-viewpoint image display system 1 displays the multi-viewpoint images, thereby providing the user 2 with a stereoscopic image. However, the present disclosure is not limited to the stereoscopic image. For example, it may be possible to provide a plurality of images which change depending on viewpoint.

Furthermore, the present disclosure is applied to a television receiver. However, the present disclosure may also be applied to an electronic device having a function of specifying the position of a user and reproducing and displaying multi-viewpoint images, for example, a portable mobile device and the like provided with a camera for distance measurement and a display for implementing naked-eye stereoscopic vision.

The above-mentioned series of processes may be performed by hardware or software. When the series of processes are performed by software, a program constituting the software may be installed from a program recording medium to a computer embedded in dedicated hardware, or a general purpose personal computer capable of performing various functions by installing various programs.

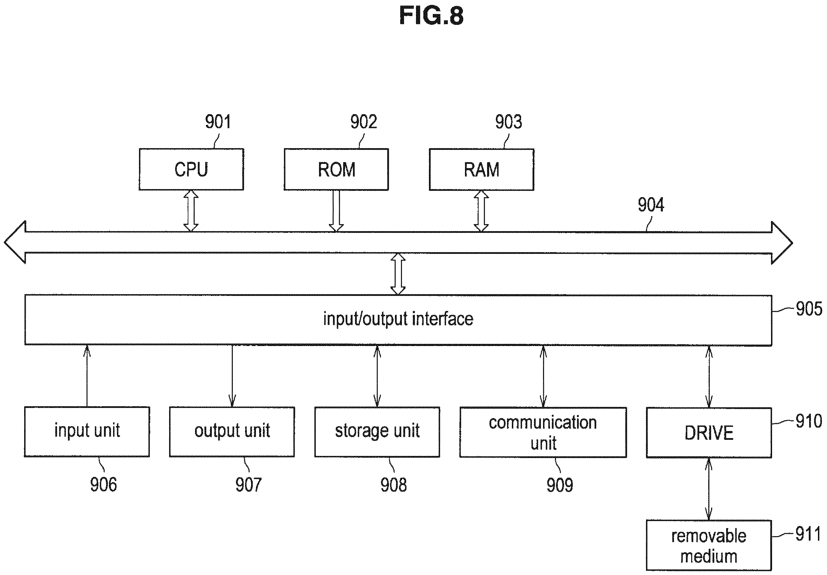

FIG 8 is a block diagram illustrating a configuration example of hardware of a computer that performs the above-mentioned series of processes using a program.

In the computer, a central processing unit (CPU) 901, a read only memory (ROM) 902, and a random access memory (RAM) 903 are connected to one another through a bus 904.

Moreover, an input/output interface 905 is connected to the bus 904. The input/output interface 905 is connected to an input unit 906 including a keyboard, a mouse, a microphone and the like, an output unit 907 including a display, a speaker and the like, a storage unit 908 including a hard disk, a nonvolatile memory and the like, a communication unit 909 including a network interface and the like, and a drive 910 for driving a removable medium 911 such as a magnetic disk, an optical disc, a magneto optical disc, or a semiconductor memory.

In the computer configured as above, the CPU 901, for example, loads a program stored in the storage unit 908 to the RAM 903 via the input/output interface 905 and the bus 904 and executes the program, so that the above-mentioned series of processes are performed.

The program executed by the computer (the CPU 901), for example, is recorded on the removable medium 911, which is a package medium including a magnetic disk (including a flexible disk), an optical disc (a compact disc-ROM (CD-ROM), a digital versatile disc (DVD) and the like), a magneto optical disc, a semiconductor memory and the like, or is provided via a wired or wireless transmission medium such as a local area network, the Internet, or digital satellite broadcasting.

Then, the program may be installed in the storage unit 908 via the input/output interface 905 by attaching the removable medium 911 to the drive 910. Furthermore, the program may be received in the communication unit 909 via the wired or wireless transmission medium, and installed in the storage unit 908. Otherwise, the program may be installed in advance in the ROM 902 or the storage unit 908.

In addition, the program executed by the computer may be executed in chronological order according to the order described in the specification, executed in parallel, or executed at timing required when a request is made.

Furthermore, an embodiment of the present disclosure is not limited to the above-mentioned embodiment, and various modifications can be made without departing from the scope of the present disclosure.

It should be understood by those skilled in the art that various modifications, combinations, sub-combinations and alterations may occur depending on design requirements and other factors insofar as they are within the scope of the appended claims or the equivalents thereof.

Additionally, the present technology may also be configured as below.

(1)

A display control apparatus that controls an image display apparatus for displaying plural-viewpoint images, the display control apparatus including:

a position specifying unit configured to specify a position of a user;
an image determination unit configured to determine the image at a viewpoint recognized by the user from the plural-viewpoint images based on the position of the user specified by the position specifying unit; and
a display control unit configured to control display of the image determined by the image determination unit.

(2)

The display control apparatus according to (1), wherein the image display apparatus comprises:

a light emitting element configured to emit light in units of pixels,
wherein the display control unit controls light emission of the light emitting element corresponding to the image determined by the image determination unit, thereby controlling display of the image.

(3)

The display control apparatus according to (1) or (2), wherein the position specifying unit calculates a movement distance of the user based on a change in the position of the user, and
the image determination unit determines the image at two or more viewpoints, which are recognized by the user, according to the movement distance of the user calculated by the position specifying unit.

(4)

The display control apparatus according to any one of (1) to (3), wherein the image display apparatus displays a stereoscopic image including the plural-viewpoint images.

(5)

A display control method of a display control apparatus that controls an image display apparatus for displaying plural-viewpoint images, the display control method including:

specifying a position of a user;
determining the image at a viewpoint recognized by the user from the plural-viewpoint images based on the position of the user specified in the specifying of the position of the user; and
controlling display of the image determined in the determining of the image.

(6)

A program for causing a computer to perform a display process of a display control apparatus that controls an image display apparatus for displaying plural-viewpoint images, wherein the program causes the computer to perform a process including

specifying a position of a user,
determining the image at a viewpoint recognized by the user from the position of the user among the plural-viewpoint images based on the position of the user specified in the specifying of the position of the user, and
controlling display of the image determined in the determining of the image.

The present disclosure contains subject matter related to that disclosed in Japanese Priority Patent Application JP 2011-082467 filed in the Japan Patent Office on April 4, 2011, the entire content of which is hereby incorporated by reference.
In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

**Claims**

1.  A display control apparatus that controls an image display apparatus for displaying plural-viewpoint images, the display control apparatus comprising:

    a position specifying unit configured to specify a position of a user;
    an image determination unit configured to determine the image at a viewpoint recognized by the user from the plural-viewpoint images based on the position of the user specified by the position specifying unit; and
    a display control unit configured to control display of the image determined by the image determination unit.

2.  The display control apparatus according to claim 1, wherein the image display apparatus comprises:

    a light emitting element configured to emit light in units of pixels,
    wherein the display control unit controls light emission of the light emitting element corresponding to the image determined by the image determination unit, thereby controlling display of the image.

3.  The display control apparatus according to claim 1, wherein the position specifying unit calculates a movement distance of the user based on a change in the position of the user, and
    the image determination unit determines the image at two or more viewpoints, which are recognized by the user, according to the movement distance of the user calculated by the position specifying unit.

4. The display control apparatus according to claim 1, wherein the image display apparatus displays a stereoscopic image including the plural-viewpoint images.

5. A display control method of a display control apparatus that controls an image display apparatus for displaying plural-viewpoint images, the display control method comprising:

   specifying a position of a user;
   determining the image at a viewpoint recognized by the user from the plural-viewpoint images based on the position of the user specified in the specifying of the position of the user; and
   controlling display of the image determined in the determining of the image.

6. A program for causing a computer to perform a display process of a display control apparatus that controls an image display apparatus for displaying plural-viewpoint images, wherein the program causes the computer to perform a process including specifying a position of a user,
   determining the image at a viewpoint recognized by the user from the position of the user among the plural-viewpoint images based on the position of the user specified in the specifying of the position of the user, and
   controlling display of the image determined in the determining of the image.

# FIG.1

# FIG.2

# FIG.3

# FIG.4

EP 2 509 330 A2

# FIG.5

START display displaying
control process

acquire camera images of stereo camera — S11

specify position of user based
on camera images — S12

calculate movement distance of user based
on change in position of user — S13

determine input number of input images
to be output to display based
on position of user — S14

DISPLAY input images WITH DETERMINED
input number ON DISPLAY — S15

S16

IS POWER TURNED ON? — YES

NO

END

# FIG.6

# FIG.7

interocular distance E

USER POSITION (Px,Pz)

RIGHT EYE          LEFT EYE

5

6                                    4

7                                    3

8                                    2

ORIGINAL (0,0)                         1

parallax barrier

| 1 | 2 | 3 | 4 | 5 | 6 | 7 | 8 | 9 |

light emitting element

**FIG.8**

**REFERENCES CITED IN THE DESCRIPTION**

**Patent documents cited in the description**

- JP 2002300610 A
- JP 10333092 A
- JP 2011082467 A